# EUROPÄISCHE PATENTSCHRIFT

(11) **EP 0 385 378 B1**
(45) Veröffentlichungstag und Bekanntmachung des Hinweises auf die Patenterteilung: **11.01.1995**
(21) Anmeldenummer: 90103757.2
(22) Anmeldetag: 26.02.1990
(51) Int. Cl.: C07F 9/6558, B01D 11/04

(54) **Verfahren zur Abtrennung von Phosphorsäure aus wässrigen Lösungen von Thiaminphosphaten**
Process for separating phosphoric acid from aqueous solutions of thiamine phosphates
Procédé de séparation de l'acide phosphorique à partir de solutions aqueuses de phosphates de thiamine

(30) Priorität: 02.03.1989 DE 3906633
(43) Veröffentlichungstag der Anmeldung: 05.09.1990
(73) Patentinhaber: BASF Aktiengesellschaft, 67063 Ludwigshafen (DE)
(72) Erfinder: Schul, Wolfgang, Dr., D-6700 Ludwigshafen (DE); Paust, Joachim, Dr., D-6708 Neuhofen (DE)

(56) Entgegenhaltungen:
- EP-A- 0 049 429
- DE-A- 1 085 527

## Beschreibung

Cocarboxylase (auch Thiaminpyrophosphat oder Thiamindiphosphat genannt) der Formel I bildet als prosthetische Gruppe zusammen mit spezifischen Proteinen mehrere Enzyme, die im Stoffwechsel des menschlichen und tierischen Organismus eine Reihe wichtiger Umsetzung katalysieren. 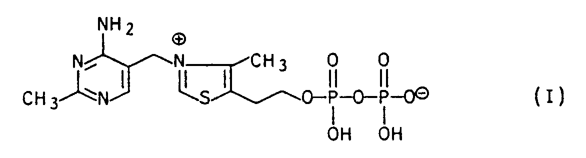
Unter gewissen Bedingungen, z.B. beim vorliegen einer Enzyminsuffizienz oder bei Sauerstoffmangel im Gewebe kann der Phosphorylierungsmechanismus des Vitamins B1 zu Cocarboxylase gestört sein. In derartigen Fällen ist die Therapie mit Cocarboxylase ebenso von Interesse wie bei diabetischer Acidose, bei bestimmten Formen peripherer Gefäßkrankheiten, Neuralgien oder Herpes Zoster.

Seit der erstmaligen Isolierung des Coenzyms der Cocarboxylase aus Hefe im Jahre 1937 hat es nicht an Versuchen gefehlt, ein vorteilhaftes Verfahren zur Herstellung desselben zu entwickeln. Eine Zusammenstellung bekannter Verfahren findet sich in der Beschreibung der DE-A-10 85 527. Alle beschriebenen technisch relevanten Synthesen der Cocarboxylase gehen von Thiamin aus, das mit den verschiedensten Phosphorylierungsmitteln umgesetzt wird. Das am häufigsten verwendete Phosphorylierungsmittel ist hochkonzentrierte Phosphorsäure. Wie schon in DE-A-10 85 527 ausgeführt wird, besteht hochkonzentrierte Orthophosphorsäure nur zu etwa 25 % aus Pyrophosphorsäure, so daß Cocarboxylase theoretisch nur in einer Ausbeute von höchstens 25 % gebildet werden kann. Die Ausbeute kann nur dadurch gesteigert werden, daß man einen der als Nebenprodukt gebildeten höheren Thiamin-polyphosphorsäureester partiell hydrolysiert, ohne dabei gleichzeitig die Cocarboxylase selbst abzubauen.

Die Hauptschwierigkeit der Cocarboxylaseherstellung liegt daher in einer möglichst vorteilhaften Abtrennung der Cocarboxylase aus dem bei der Phosphorylierung von Thiamin anfallenden Gemisch aus Phosphorsäure und den verschiedenen Thiaminphosphorsäureestern. Hierzu hat es sich wegen der Säureempfindlichkeit der Thiaminphosphorsäureester als zweckmäßig erwiesen, die überschüssige Phosphorsäure möglichst schon vor der eigentlichen Auftrennung der Ester abzutrennen.

Die Abtrennung der Phosphorsäure erfolgt gemäß dem Stand der Technik im allgemeinen durch mehrmaliges Ausfällen der Thiaminphosphorsäureester mit Lösungsmitteln, wie Methanol oder Aceton und Abtrennen derselben von der phosphorsauren wäßrigen Lösung. Die hierzu benötigten Lösungsmittelmengen sind erheblich. Außerdem ist hierdurch eine vollständige Abtrennung der Phosphorsäure nicht möglich.

Eine andere Möglichkeit wäre die Behandlung der phosphorsäurehaltigen Thiaminphosphat-Lösungen mit basischen Ionenaustauschern. Nachteilig ist hierbei, daß sehr große Mengen an Ionenaustauschern benötigt werden und daß die Thiaminphosphatester durch die Ionenaustauscherbehandlung in stark verdünnter Lösung anfallen.

Es wurde nun gefunden, daß durch flüssig-flüssig-Extraktion der bei der Phosphorylierung von Thiamin anfallenden Thiaminphosphatlösungen mit einem Gemisch aus einem geeigneten nicht wasserlöslichen tertiären Amin und einem nicht mit Wasser mischbaren Lösungsmittel mittlerer Polarität eine vollständige Abtrennung der überschüssigen Phosphorsäure möglich ist. Hierbei wird die Phosphorsäure mit dem nicht wasserlöslichen Amin in das entsprechende Salz überführt, welches dann durch das nicht mit Wasser mischbare Lösungsmittel extrahiert wird. Es war sehr überraschend, daß bei dieser Extraktion der Phosphorsäure die ebenfalls zur Salzbildung mit Aminen befähigten Thiaminphosphate nicht mit extrahiert werden, sondern nahezu quantitativ in der wäßrigen Lösung verbleiben.

Gegenstand der Erfindung ist daher ein Verfahren zur Abtrennung von Phosphorsäure aus wäßrigen Lösungen von Thiaminphosphaten, die z.B. bei der Herstellung von Cocarboxylase durch Phosphorylierung von Thiamin und ggf. anschließende partielle Hydrolyse anfallen, das dadurch gekennzeichnet ist, daß man die Phosphorsäure mit einem praktisch nicht oder nur wenig wasserlöslichen tertiären Amin in das entsprechende Salz überführt und dieses mit einem praktisch nicht oder nur wenig mit Wasser mischbaren Lösungsmittel mittlerer Polarität extrahiert.

Mit besonderem Vorteil führt man das erfindungsgemäße Verfahren so durch, daß man die Phosphorsäure mit einem Gemisch aus einem praktisch nicht oder nur wenig wasserlöslichen tertiären Amin und einem praktisch nicht oder nur wenig mit Wasser mischbaren Lösungsmittel mittlerer Polarität extrahiert.

Das Extraktionsmittel ist durch einfache Rückextraktion mit alkalischen wässrigen Lösungen (z.B. NaOH, KOH) regenerierbar. Die Thiaminesterphosphate liegen nach der Extraktion in der wäßrigen Phase als Thiaminphosphorsäureesterphosphate vor, die auf übliche Weise durch Ionentauscherchromatographie aufgetrennt werden können.

Da durch die Extraktion die überschüssige Phosphorsäure so gut wie völlig entfernt werden kann, werden hierbei nur noch wesentlich geringere Mengen an Ionenaustauschern benötigt.

Als tertiäre Amine sind für das erfindungsgemäße Verfahren nach bisherigen Beobachtungen prinzipiell alle tertiären Amine geeignet, die keine oder geringe Wasserlöslichkeit aufweisen, so daß es auf deren chemische Natur, sofern sie aufgrund funktioneller Gruppen nicht anderweitig mit den Reaktionspartnern reagieren können, nicht ankommt. Genannt seien beispielsweise
- aliphatische tertiäre Amine mit insbesamt 8 bis 40, vorzugsweise 12 bis 36 C-Atomen, wie vor allem Trioctylamin sowie Trihexylamin und Tridodecylamin,
- aliphatisch-cycloaliphatische tertiäre Amine wie N,N-Dimethyl-cyclohexylamin und
- aliphatisch-araliphatische tertiäre Amine wie N,N-Dimethyl-benzylamin,
Mit besonderem Vorteil verwendet man die gut zugänglichen und daher billigen Amine Trioctylamin und Tridodecylamin.

Die tertiären Amine verwendet man im allgemeinen in solchen Mengen, wie sie für die Salzbildung notwendig sind. Mit besonderem Vorteil arbeitet man so, daß die Salzbildung gleich in Gegenwart des zur Extraktion verwendeten praktisch nicht mit Wasser mischbaren Lösungsmittels mittlerer Polarität vornimmt. Praktisch bedeutet das, daß man die Phosphorsäure mit einem Gemisch aus dem nicht oder nur wenig wasserlöslichen Amin und dem nicht oder nur wenig mit Wasser mischbaren Lösungsmittel extrahiert. Hierzu verwendet man Gemische, die das Amin in Mengen von 10 bis 80, vorzugsweise 40 bis 70 Gew.%, bezogen auf das Lösungsmittel enthalten. Arbeitet man mit Gemischen, die nur geringe Mengen an Amin enthalten, so muß man entweder große Mengen an dem Amin-Lösungsmittelgemisch verwenden oder aber den Extraktionsvorgang mehrfach wiederholen. Arbeitet man mit einem Amin-Lösungsmittelgemisch, das große Mengen an Amin enthält, kann ein einziger Extraktionsvorgang ausreichen.

Als nicht oder nur wenig mit Wasser mischbare Lösungsmittel mittlerer Polarität kommen im wesentlichen solche Lösungsmittel in Betracht, die einen sog. E_{T}-Wert von etwa 50 bis etwa 30 kcal/mol (211 bis 126 kJ/mol) aufweisen (vgl. Chr. Reichardt "Solvent Effects in Organic Chemistry" Verlag Chemie, 1979, bes. S. 242-45). Beispielsweise seien genannt: Alkohole mit 4 bis 8 C-Atomen; Ether, wie Diethylether; Methyl-tert.-butylether; Diphenylether und Di-n-butylether; sowie Ketone mit 5 bis 8 C-Atomen, wie Diethylketon, Methylisobutylketon, Acetophenon und Cyclohexanon und Kohlenwasserstoffe, wie Toluol. Essigsäureethylester und halogenierte Kohlenwasserstoffe können prinzipiell auch verwendet werden, sind jedoch aus verfahrenstechnischen Gründen nicht sehr vorteilhaft.

Mit besonderem Vorteil verwendet man Methyl-isobutylcarbinol, 3-Ethyl-pentanol, 1-Hexanol, Methyl-cyclohexanol, Methylisobutylketon und Methyl-tert.-Butylether.

Die Lösungsmittel verwendet man im allgemeinen in Mengen von 1 bis 4 kg, vorzugsweise 1,5 bis 2 kg pro kg der zu extrahierenden Phosphorsäure. Im Gemisch mit dem tertiären Amin ist es enthalten in Mengen von 20 bis 90, vorzugsweise 30 bis 60 Gew.%, bezogen auf das tertiäre Amin.

Arbeitet man nicht mit dem Gemisch aus tert. Amin und dem Lösungsmittel, d.h. versetzt man die phosphorsaure wäßrige Lösung von Thiaminphosphaten in Abwesenheit des nicht mit Wasser mischbaren Lösungsmittels mit dem tertiären Amin, so kann es vorkommen, daß das gebildete Salz in schmieriger Form anfällt und daher bei der anschließenden Extraktion Schwierigkeiten bereitet.

Die Extraktion der Phosphorsäure ist abgeschlossen, wenn die wäßrige Lösung einen pH-Wert zwischen 3 und 4, insbesondere zwischen 3,2 und 3,4 aufweist.

Das erfindungsgemäße Verfahren ist geeignet für die Abtrennung von Phosphorsäure aus phosphorsauren wäßrigen Lösungen von Thiaminphosphaten, die bei der Phosphorylierung von Thiamin anfallen.

Die Zusammensetzung des bei der Phosphorylierung von Thiamin erhaltenen Gemisches von Thiaminphosphaten ist abhängig von der in die Phosphorsäure eingetragenen Thiaminmenge. Bei niedrigen Thiamin/Phosphorsäureverhältnissen bilden sich fast 50 % höhere Thiaminphosphate, bei hohen Thiamin/Phosphorsäure-Verhältnissen dagegen steigt der Thiaminmonophosphatanteil auf über 60 %.

Die Thiaminphosphate werden in saurer Lösung hydrolysiert. Hierbei zeigen die di-, tri- und höheren Phosphate eine wesentlich höhere Labilität gegenüber wäßrigen Säuren als Thiaminmonophosphat. Bei pH-Werten kleiner 1, welche man beim Lösen des Rohphosphorylierungsproduktes in Wasser erreicht, ist die Hydrolysegeschwindigkeit der höheren Phosphate relativ groß.

Enthält das Rohphosphorylierungsprodukt einen hohen Gehalt an höheren Thiaminphosphaten, so empfiehlt es sich, das bei der Phosphorylierung anfallende Gemisch zunächst einer partiellen Hydrolyse zu unterziehen. Hierzu erhitz man im allgemeinen das bei der Phosphorylierung angefallene Thiamin-Rohphosphat in Wasser bei einem pH-Wert von 0,5 bis 3, vorzugsweise 0,5 bis 1,5 auf Temperaturen von 30 bis 100, vorzugsweise 50 bis 80°C. Die günstigsten Bedingungen können jeweils durch Untersuchung des Gemisches mittels HPLC ermittelt werden. Je länger man das Thiamin-Rohphosphat in Wasser erhitzt, desto größer wird der Anteil an Thiaminmonophosphat. Durch verlängerte partielle Hydrolyse, d.h. durch etwa 2- bis 3-stündiges Erhitzen des Thiamin-Rohphosphatgemisches in Wasser, kann man gewünschtenfalls vorwiegend Thiaminmonophosphat enthaltende phosphorsaure wäßrige Lösungen erhalten, aus denen nach der erfindungsgemäßen Entfernung der Phosphorsäure auf einfache Weise das ebenfalls benötigte Thiaminmonophosphat erhalten werden kann.

Nach der Extraktion der überschüssigen Phosphorsäure können die Thiaminphosphate in an sich bekannter Weise isoliert werden.

Die Isolierung von Cocarboxylase und Thiaminmonophosphat erfolgt mit Vorteil so, daß man aus der durch Extraktion von Phosphorsäure befreiten Thiaminphosphorsäureesterphosphatlösung durch Zugabe eines niederen Alkohols oder Aceton einen Großteil des Thiaminmonophophorsäureesters als kristallines Thiaminmonophosphorsäureesterphosphat ausfällt und aus der verbleibenden Lösung mit angereichertem Cocarboxylasegehalt nach Abdestillieren des organischen Lösungsmittels auf übliche Weise durch Ionenaustauscher-Chromatographie Cocarboxylase gewinnt.

Nähere Angaben über die Abtrennung der Thiaminphosphate finden sich beispielsweise in der bereits oben genannten DE-A-10 85 527.

Aus dem bei der Isolierung enthaltenen Cocarboxylasetetrahydrat können in an sich bekannter Weise auch gewünschte Salze der Cocarboxylase hergestellt werden.

Mit Hilfe des erfindungsgemäßen Verfahrens gelingt die Isolierung von Cocarboxylase aus den bei der Phosphorylierung von Thiamin anfallenden Gemischen aus Orthophosphorsäure und verschiedenen Thiaminphosphorsäureestern auf einfachere und vorteilhaftere Weise.

Ein weiterer Vorteil der durch vollständige extraktive Phosphorsäureentfernung erhaltenen Thiaminphosphorsäureesterphosphat-Lösung ist, daß durch Zugabe organischer Lösungsmittel, wie Methanol, Ethanol oder Aceton ein Großteil des Thiaminmonophosphorsäureesters direkt als Thiaminmonophosphorsäureesterphosphat (verkaufsfähiges Marktprodukt) kristallin erhalten werden kann. Die verbleibende Lösung mit angereichertem Cocarboxylasegehalt kann nach Abdestillieren des organischen Lösungsmittels auf übliche Weise durch Ionentauscher-Chromatographie gereinigt werden. Durch den verringerten Thiaminmonophosphatester-Gehalt dieser Lösung sind nur wesentlich geringere Mengen an Ionentauschern nötig.

Durch verlängerte partielle Hydrolyse der durch Phosphorylierung von Thiamin erhaltenen Lösung von Thiaminphosphaten, anschließende Extraktion der Phosphorsäure und Zugabe organischer Lösungsmittel, wie Methanol, Ethanol oder Aceton, kann nahezu der gesamte Gehalt an Thiaminphosphaten auf einfache Weise in Form von kristallinem, verkaufsfähigen Thiaminmonophosphat isoliert werden.

Die folgenden Beispiele sollen das erfindungsgemäße Verfahren erläutern.

Den Beispielen vorangestellt werden einige Erläuterungen über die dabei angewendete Analytik der Thiaminphosphate.

Die Analytik der Thiamin-Phosphorylierungsprodukte wurde durch HPLC auf einer Reversephase-Kieselgelsäule durchgeführt (vgl. M. Kumura et al, J. Chromatography, 332 (1985), Seiten 181 bis 188).

| | |
|---|---|
| Säule | RP 18,7 µm 250 x 8 mm |
| Laufmittel | 997 ml 0,2 m NaH₂PO₄-Puffer in H₂O |
| | 3 ml Acetonitril |
| Druck | 115 bar |

Zur Detektion von Thiamin und der Phosphorylierungsprodukte wurden mit einem UV-Detektor bei λ = 235 nm gemessen, die Anzeige von Phosphorsäure erfolgte über einen nachgeschalteten RI-Detektor.

Die Bestimmung der Phosphorylierungsprodukt-Verhältnisse erfolgt aus dem UV-Integrator-Ausdruck und entspricht nicht den molaren Ausbeuten der verschiedenen phosphorylierten Reaktionsprodukte. Diese kann man durch Einbeziehung der unterschiedlichen Extinktionskoeffizienten der einzelnen Phosphat-Spezies erhalten, für relative Vergleiche der Phosphorylierungsreaktionen ist dies jedoch nicht notwendig.

### Beispiel 1

A) Phosphorylierung von Thiaminchlorid-hydrochlorid
   200 g (0,59 Mol) Thiaminchlorid-hydrochlorid wurden mit 250 g Orthophosphorsäure 1 Stunde (h) bei 100°C gerührt. Nach Erwärmen der Mischung auf 120°C gab man 200 g Phosphorpentoxid zu, so daß die auftretende HCl-Gasentwicklung unter Kontrolle blieb. Nach einer Reaktionszeit von weiteren 15 Minuten ließ man die Reaktionsmischung abkühlen. Man erhielt 544 g eines phosphorsäurehaltigen Thiaminphosphatester-Gemisches, das nach HPLC folgende Zusammensetzung hatte:
   33,7 % Cocarboxylase,
   37,2 % Thiaminmonophosphat
   15,0 % Thiamintriphosphat
   13,1 % Thiamintetraphosphat
B) Partielle Hydrolyse des Thiaminphosphatester-Gemisches
   Das glasartig erstarrte Rohphosphat (544 g) wurde in 1088 ml Wasser gelöst und die Lösung anschließend 1 h auf 70°C erhitzt. Anschließend wurde die Lösung mittels HPLC untersucht. Sie hatte folgende Zusammensetzung:
   61,4 % Thiaminmonophosphat
   31,5 % Cocarboxylase,
   2,6 % Thiamintriphosphat
C) Extraktion der Phosphorsäure
   Nach Abkühlen der Lösung extrahierte man zur Entfernung der Hauptmenge freier Phosphorsäure zweimal mit je 1 l eines Gemisches aus Methylisobutylcarbinol enthaltend 75 Gew.% Tri-n-octylamin (Extraktionsmittel kann rückgeführt werden). Man erhielt 907 g einer Rohphosphat-Lösung (pH 3,3), der folgenden Zusammensetzung:
   66,9 % Thiaminmonophosphat
   30,2 % Cocarboxylase und
   1,5 % Thiamintriphosphat
D) Auftrennung der Thiaminphosphatester durch Ionenaustauscher
   Die nach Extraktion des Rohphosphats erhaltene Thiaminphosphatester-Lösung (907 g) wurde über 2 Ionenaustauschersäulen getrennt: Die Säulen enthielten:
   1) 400 ml Amberlite: IRA 93 (schwach basisch, OH-Form)
   2) 3000 ml Lewatit IR-120 (stark sauer, H⁺-Form)
   Die aus dem schwach basischen Ionentauscher (IRA 93) ablaufende Lösung wurde direkt auf den sauren Ionentauscher Lewatit IR-120 aufgegeben. Nach einem Vorlauf von 300 ml erhielt man 1,2 l einer Cocarboxylase-Lösung folgender Zusammensetzung:
   99,5 % Cocarboxylase und
   0,5 % Thiaminmonophosphat
   Nach Eindampfen der Cocarboxylase-Lösung (1,2 l) auf ca. 100 ml bei ca. 40 mbar und Zugabe von 400 ml Methanol erhielt man 54 g (18 % bezogen auf eingesetztes Thiamin x HCl) Cocarboxylase-Tetrahydrat.
E) Regenerierung der Ionenaustauscher und Gewinnung von Thiamin-orthophosphorsäure-bis-hydrochlorid
   a) Der schwach basische Ionenaustauscher (Amberlite IRA 93) wurde mit 1,0 l einer 1,5 %igen wäßrigen NaOH-Lösung regeneriert und war nach Neutralwaschung mit 3 l H₂O für weitere Trennung einsetzbar.
   b) Der saure Ionentauscher IR-120 wurde mit 5 l einer 10 %igen wäßrigen HCl-Lösung regeneriert und war nach Neutralwaschung mit 20 l H₂O für weitere Trennungen einsetzbar. Die salzsaure Regenerierlösung (5 l) wurde auf 400 ml eingedampft (bei ca. 40 mbar). Durch Zugabe von 2 l MeOH wurden 153 g (57 %, bezogen auf eingesetztes Thiaminhydrochlorid) Thiamin-orthophosphorsäure-bis-hydrochlorid gewonnen, die anstelle von Thiaminchlorid-hydrochlorid für weitere Phosphorylierungen eingesetzt werden können.

Auf analoge Weise gelang eine praktisch quantitative extraktive Abtrennung von Phosphorsäure aus wäßrigen Lösungen von Thiaminphosphaten die durch Phosphorylierung von Thiamin und ggf. anschließende partielle Hydrolyse hergestellt worden waren:
a) durch 3-malige Extraktion mit einem Gemisch bestehend aus 40 Gew.% Tri-n-dodecyl-amin und 60 Gew.% Methyl-tert.-butylether;
b) durch 2-malige Extraktion mit einem Gemisch bestehend aus 50 Gew.% Tri-n-octylamin und 50 Gew.% 1-Hexanol;
c) durch 3-malige Extraktion mit einem Gemisch bestehend aus 60 Gew.% Tri-n-hexylamin und 40 Gew.% 3-Ethyl-pentanol sowie
d) duch 3-malige Extraktion mit einem Gemisch bestehend aus 40 Gew.% Tri-n-butylamin und 60 Gew.% Methyl-isobutylketon.

### Beispiel 2

200 g Thiaminchlorid-hydrochlorid wurden mit 250 g Orthophosphorsäure analog Beispiel 1A phosphoryliert, das erhaltene Thiaminphosphatester-Gemisch analog Beispiel 1B partiell hydrolysiert und die dabei erhaltene Lösung analog Beispiel 1C 2x mit je 1 l eines Gemisches aus Methyl-isobutylcarbinol enthaltend 75 Gew.% Tri-n-octylamin extrahiert.

1100 ml der extrahierten Lösung enthielten 318 g Trockensubstanz (TS) folgender Zusammensetzung:
72,7 % Thiaminmonophosphat
23,4 % Cocarboxylase
1,0 % Thiamintriphosphat
Die 1100 ml der extrahierten Rohphosphatlösung wurden bei 50°C mit 1100 ml Ethanol versetzt und das erhaltene Gemisch innerhalb 1 h auf RT abgekühlt. Anschließend ließ man noch etwa 30 min bei RT stehen und filtrierte dann die ausgefallenen Kristalle ab.

Das Kristallisat (180 g TS) enthielt:
98,0 % Thiaminmonophosphat
1,5 % Cocarboxylase
Das Kristallisat wurde bei 40°C unter vermindertem Druck getrocknet. Es kann dann als solches verwendet oder aber in die Phosphorylierungsreaktion zurückgeführt werden.

Die Mutterlauge (137 g (TS) enthielt:
35,8 % Thiaminmonophosphat
53,5 % Cocarboxylase und
2,3 % Thiamnitrophosphat.

Die Mutterlauge wurde zur Abtrennung des Ethanols unter vermindertem Druck bei 30 bis 40°C destilliert. Der erhaltene Rückstand wurde durch Ionenaustauscherchromatographie an 350 ml Amberlite IRA 93 (schwach basisch; OH-Form) und Lewatit IR-120 auf bekannte Weise gereinigt.

Man erhielt 1000 ml einer Cocarboxylase-haltigen Lösung, die nach Eindampfen und Kristallisation 54 g Cocarboxylase-Tetrahydrat lieferte.

### Beispiel 3

200 g Thiaminchlorid-hydrochlorid wurden mit einem Gemisch aus 250 g Orthophosphorsäure und 200 g P₂O₅ analog Beispiel 1A phosphoryliert, das erhaltene Thiaminphosphatester-Gemisch wurde durch 3 1/2 stündiges Erhitzen auf 70°C partiell hydrolisiert und die dabei erhaltene Lösung analog Beispiel 1C 2x mit je 1 l eines Gemisches aus Methyl-isobutylcarbinol enthaltend 75 Gew.% Tri-n-octylamin extrahiert.

1100 ml der extrahierten Lösung enthielten 318 g Trockensubstanz (TS) folgender Zusammensetzung:
94 % Thiaminmonophosphat und
3 % Cocarboxylase
Die 1100 ml der extrahierten Rohphosphatlösung wurden bei 50°C mit 1100 ml Ethanol versetzt und das erhaltene Gemisch innerhalb 1 h auf RT abgekühlt. Anschließend ließ man noch etwa 30 min bei RT stehen und filtrierte dann die ausgefallenen Kristalle ab.

Das Kristallisat (240 g TS) enthielt:
99,6 % Thiaminmonophosphat
Das Kristallisat wurde bei 40°C unter vermindertem Druck getrocknet. Es kann als solches verwendet werden.

## Patentansprüche

1. Verfahren zur Abtrennung von Phosphorsäure aus wäßrigen Lösungen von Thiaminphosphaten, die bei der Phosphorylierung von Thiamin und ggf. anschließende partielle Hydrolyse anfallen, dadurch gekennzeichnet, daß man die Phosphorsäure mit einem praktisch nicht oder nur wenig wasserlöslichen tertiären Amin in das entsprechende Salz überführt und dieses mit einem praktisch nicht oder nur wenig mit Wasser mischbaren Lösungsmittel mittlerer Polarität extrahiert.

2. Verfahren gemäß Anspruch 1, dadurch gekennzeichnet, daß man die Phosphorsäure mit einem Gemisch aus einem praktisch nicht oder nur wenig wasserlöslichen tertiären Amin und einem praktisch nicht oder nur wenig mit Wasser mischbaren Lösungsmittel mittlerer Polarität extrahiert.

3. Verfahren gemäß Anspruch 1, dadurch gekennzeichnet, daß man als praktisch nicht oder nur wenig wasserlösliches tertiäres Amin ein aliphatisches oder aliphatisch-cycloaliphatisches tertiäres Amin mit 8 bis 40 C-Atomen oder ein aliphatisch-araliphatisches tertiäres Amin mit 9 bis 36 C-Atomen verwendet.

4. Verfahren gemäß Anspruch 1, dadurch gekennzeichnet, daß man als praktisch nicht oder nur wenig wasserlösliches tertiäres Amin Trioctylamin oder Tridodecylamin verwendet.

5. Verfahren gemäß Anspruch 1, dadurch gekennzeichnet, daß man als praktisch nicht oder nur wenig mit Wasser mischbares Lösungsmittel mittlerer Polarität einen aliphatischen oder cycloaliphatischen Alkohol mit 4 bis 8 C-Atomen, einen Ether mit 4 bis 12 C-Atomen, ein Keton mit 5 bis 8 C-Atomen oder einen Kohlenwasserstoff mit 6 bis 10 C-Atomen verwendet.

6. Verfahren gemäß Anspruch 1, dadurch gekennzeichnet, daß man als praktisch nicht oder nur wenig mit Wasser mischbares Lösungsmittel mittlerer Polarität Methylisobutylcarbinol, 3-Ethyl-pentanol, 1-Hexanol, Methylcyclohexanol, Methylisobutylketon oder Methyl-tert-butylether verwendet.

## Claims

1. A process for separating phosphoric acid from aqueous solutions of thiamine phosphates which are obtained in the phosphorylation of thiamine, with or without subsequent partial hydrolysis, wherein the phosphoric acid is converted with a virtually water-insoluble or only slightly water-soluble tertiary amine into the corresponding salt and the latter is extracted with a virtually water-immiscible or only slightly water-miscible solvent of moderate polarity.

2. A process as claimed in claim 1, wherein the phosphoric acid is extracted with a mixture of a virtually water-insoluble or only slightly water-soluble tertiary amine and a virtually water-immiscible or only slightly water-miscible solvent of moderate polarity.

3. A process as claimed in claim 1, wherein the virtually water-insoluble or only slightly water-soluble tertiary amine used is an aliphatic or aliphatic-cycloaliphatic tertiary amine of 8 to 40 carbon atoms or an aliphatic-araliphatic tertiary amine of 9 to 36 carbon atoms.

4. A process as claimed in claim 1, wherein the virtually water-insoluble or only slightly water-soluble tertiary amine used is trioctylamine or tridodecylamine.

5. A process as claimed in claim 1, wherein the virtually water-immiscible or only slightly water-miscible solvent of moderate polarity which is used is an aliphatic or cycloaliphatic alcohol of 4 to 8 carbon atoms, an ether of 4 to 12 carbon atoms, a ketone of 5 to 8 carbon atoms or a hydrocarbon of 6 to 10 carbon atoms.

6. A process as claimed in claim 1, wherein the virtually water-immiscible or only slightly water-miscible solvent of moderate polarity which is used is methylisobutylcarbinol, 3-ethylpentanol, 1-hexanol, methylcyclohexanol, methyl isobutyl ketone or methyl tert-butyl ether.

## Revendications

1. Procédé de séparation de l'acide phosphorique de solutions aqueuses de thiaminephosphates produites lors de la phosphorylation de thiamine et éventuellement d'une hydrolyse partielle ultérieure, caractérisé en ce qu'on transforme l'acide phosphorique avec une amine tertiaire pratiquement pas ou peu soluble dans l'eau en le sel correspondant, et qu'on extrait celui-ci avec un solvant de polarité moyenne pratiquement pas ou peu miscible à l'eau.

2. Procédé selon la revendication 1, caractérisé en ce qu'on extrait l'acide phosphorique avec un mélange d'une amine tertiaire pratiquement pas ou peu soluble dans l'eau et d'un solvant de polarité moyenne pratiquement pas ou peu miscible à l'eau.

3. Procédé selon la revendication 1, caractérisé en ce qu'on utilise comme amine tertiaire pratiquement pas ou peu soluble dans l'eau une amine tertiaire aliphatique ou aliphatique-cycloaliphatique ayant de 8 à 40 atomes de C, ou une amine tertiaire aliphatique-araliphatique ayant de 9 à 36 atomes de C.

4. Procédé selon la revendication 1, caractérisé en ce qu'on utilise comme amine tertiaire pratiquement pas ou peu soluble dans l'eau la trioctylamine ou la tridodécylamine.

5. Procédé selon la revendication 1, caractérisé en ce qu'on utilise comme solvant de polarité moyenne pratiquement pas ou peu miscible à l'eau un alcool aliphatique ou cycloaliphatique ayant de 4 à 8 atomes de C, un éther ayant de 4 à 12 atomes de C, une cétone ayant de 5 à 8 atomes de C, ou un hydrocarbure ayant de 6 à 10 atomes de C.

6. Procédé selon la revendication 1, caractérisé en ce qu'on utilise comme solvant de polarité moyenne pratiquement pas ou peu miscible à l'eau le méthylisobutylcarbinol, le 3-éthyl-pentanol, le 1-hexanol, le méthylcyclohexanol, la méthylisobutylcétone ou le méthyl-tert-butyléther.
